# EUROPEAN PATENT APPLICATION

(11) **EP 4 848 779 A1**
(43) Date of publication of application: **02.12.2026**
(21) Application number: 24919233.7
(22) Date of filing: 23.01.2024
(51) Int. Cl.: H04W 24/02

(54) **SDU DISCARD CONFIGURATION METHOD AND APPARATUS**

(71) Applicant: 1FINITY INC., Kawasaki-shi, Kanagawa 211-8588 (JP)
(72) Inventor: YI, Su, Beijing 100022 (CN); WANG, Xin, Beijing 100022 (CN)
(74) Representative: Haseltine Lake Kempner LLP
(86) International application number: PCT/CN2024/073650
(87) International publication number: WO 2025/156115

(57) **Abstract**

Embodiments of the present disclosure provide a configuring method and apparatus for SDU discard, the method comprising that a terminal equipment receives a first message transmitted by a network device, the first message being used to request the terminal equipment, for a PDU Set with low importance, to use a discard timer shorter than a discard timer configured by a PDCP entity to which the PDU Set belongs, at a PDCP layer. According to embodiments of the present disclosure, when congestion occurs, a network device requests, via a first message, a terminal equipment, for a PDU Set with low importance (i.e., PDCP SDUs belonging to the PDU Set), to use a discard timer shorter than a discard timer configured by a PDCP entity to which the PDU Set belongs, at a PDCP layer. Thus, PSI-based SDU discard is solved, data congestion is avoided, and data transmission for a PDU Set is able to be better supported, so as to achieve integrated packet processing of a PDU Set and differentiated PDU Set processing, thereby improving user experience of XR and media services.

## Description

### TECHNICAL FIELD

The present disclosure relates to the field of communications.

### BACKGROUND

In 3rd Generation Partnership Project (3GPP) services and networks, eXtended Reality (XR) services are supported, the XR services referring to all real and virtual combined environments and human-computer interactions generated by computer technologies and wearable devices. Application fields thereof include but are not limited to entertainment, healthcare, education, etc. The XR services may include representative forms such as Virtual Reality (VR) services, Augmented Reality (AR) services, and Mixed Reality (MR) services, as well as hybrid and intersecting fields.

The virtual reality is a rendered version of a delivered visual and audio scene. When an observer or user moves within limits defined by an application program, the rendering is designed to mimic the visual and audio sensory stimuli of the real world as naturally as possible. The augmented reality refers to providing a user with additional information or artificially generated items, or content overlaid on a current environment thereof. The mixed reality is an advanced form of AR, in which some virtual elements are inserted into a physical scenario, with a purpose of providing an illusion that makes persons feel these elements are a part of a real scenario.

A PDU Set consists of one or more Protocol Data Units (PDUs), these PDUs carrying a payload of one information element generated at an application layer, such as a frame or video slice for XR and media services. In some implementations, an application layer requires all PDUs in a PDU Set to use corresponding information elements. In other implementations, when some PDUs are lost, an application layer may still recover all or part of information elements.

It should be noted that the above introduction to the technical background is just to facilitate a clear and complete description of technical solutions of the present disclosure, and is elaborated to facilitate understanding of those skilled in the art. It cannot be considered that the technical solutions are known by those skilled in the art just because these solutions are elaborated in Background of the present disclosure.

### SUMMARY

The inventor finds that a PDU Set has different Quality of Service (QoS) demands, such as priority, importance, etc. Specifically, there are two major demands for processing of a PDU Set: integrated packet processing of the PDU Set, and differentiated processing of the PDU Set. To achieve the above demands, user plane enhancement includes that a User Plane Function (UPF) identifies the following information related to a PDU Set: a sequence number of the PDU Set, a last one PDU mark of the PDU Set, a PDU sequence number inside the PDU Set, a size of the PDU Set, and PDU Set Importance (PSI).

When congestion occurs, a network device (such as a base station) may use PSI to perform discard of a PDU Set. However, content related to how to configure a Data Radio Bearer (DRB) to implement PSI-based discard is not standardized. Therefore, a terminal equipment (such as a UE) is unable to correctly use PSI to perform PSI-based Service Data Unit (SDU) discard in the case of congestion.

For at least one of the above problems or other similar problems, embodiments of the present disclosure provide a configuring method and apparatus for SDU discard. The SDU refers to a PDCP SDU, and one PDU in a PDU Set corresponds to one PDCP SDU.

According to an aspect of embodiments of the present disclosure, a configuring apparatus for SDU discard is provided, applicable to a terminal equipment, the apparatus including:
a receiving unit configured to receive a first message transmitted by a network device, the first message being used to request the terminal equipment, for a protocol data unit (PDU) Set with low importance, to use a discard timer shorter than a discard timer configured by a PDCP entity to which the PDU Set belongs, at a packet data convergence protocol (PDCP) layer.

According to another aspect of embodiments of the present disclosure, a configuring apparatus for SDU discard is provided, applicable to a terminal equipment, the apparatus including:
a receiving unit configured to receive a PSI-based SDU discard activation/deactivation MAC CE transmitted by a network device, a Di field of each bit of an octet of the MAC CE indicating an activation/deactivation status of a corresponding DRB for PSI-based SDU discard.

One of advantageous effects of embodiments of the present disclosure lies in that according to embodiments of the present disclosure, by performing enhancements related to PDCP SDU (i.e., PDU in a PDU Set) discard via a Radio Resource Control (RRC) configuration or a Media Access Control (MAC) layer behavior to solve PSI-based SDU discard, avoid data congestion, and better support data transmission for PDU Sets, to achieve integrated packet processing of a PDU Set and differentiated PDU Set processing, thereby improving user experience of XR and media services.

Referring to later descriptions and drawings, specific implementations of the present disclosure are disclosed in detail, indicating modes in which principles of the present disclosure may be adopted. It should be understood that implementations of the present disclosure are not limited in scope thereby. Within spirits and scopes of terms of attached claims, implementations of the present disclosure include many changes, modifications, and equivalents.

Features described and/or illustrated for one implementation may be used in the same way or in a similar way in one or more other implementations, and be combined with features in other implementations or replace features in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings, and may be used to indicate corresponding components used in more than one implementation.

Included drawings are used to provide further understanding on embodiments of the present disclosure, constitute a part of the Specification, are used to illustrate implementations of the present disclosure, and expound principles of the present disclosure together with text descriptions. Obviously, drawings in the following descriptions are only some embodiments of the present disclosure. Those skilled in the art may further obtain other drawings according to these drawings under the premise that those skilled in the art do not pay inventive effort. In the drawings:
FIG. 1 is a schematic diagram of a configuring method for SDU discard in embodiments of a first aspect of the present disclosure;
FIG. 2 is a schematic diagram of a format of a PSI-based SDU discard activation/deactivation MAC CE;
FIG. 3 is another schematic diagram of a format of a PSI-based SDU discard activation/deactivation MAC CE;
FIG. 4 is another schematic diagram of a configuring method for SDU discard in embodiments of a first aspect of the present disclosure;
FIG. 5 is a schematic diagram of a configuring method for SDU discard in embodiments of a second aspect of the present disclosure;
FIG. 6 is another schematic diagram of a configuring method for SDU discard in embodiments of a second aspect of the present disclosure;
FIG. 7 is a schematic diagram of a configuring apparatus for SDU discard in embodiments of a third aspect of the present disclosure;
FIG. 8 is another schematic diagram of a configuring apparatus for SDU discard in embodiments of a third aspect of the present disclosure;
FIG. 9 is another schematic diagram of a configuring apparatus for SDU discard in embodiments of a third aspect of the present disclosure;
FIG. 10 is a further schematic diagram of a configuring apparatus for SDU discard in embodiments of a third aspect of the present disclosure;
FIG. 11 is a schematic diagram of a terminal equipment in embodiments of the present disclosure;
FIG. 12 is a schematic diagram of a network device in embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations in which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of relevantly listed terms. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless a context clearly indicates otherwise. In addition, term "according to" should be understood as "at least partially according to......", and term "based on" should be understood as "at least partially based on......", unless a context clearly indicates otherwise.

In embodiments of the present disclosure, term "communication network" or "wireless communication network" may refer to a network conforming to any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol of any stage, which for example may include but be not limited to the following communication protocols: 1G (generation), 2G, 2.5G, 2.75G, 3G, 4G, 4.5G, future 5G, New Radio (NR) and so on, and/or other communication protocols that are currently known or will be developed in future.

In embodiments of the present disclosure, term "network device" e.g. refers to a device configured to access a terminal equipment to a communication network in a communication system and provide services for the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and moreover, may further include a Remote Radio Head (RRH), a Remote Radio Unit (RRU), a relay or low power node (such as femto, pico, etc.). And term "base station" may include some or all functions thereof, and each base station may provide communication coverage to a specific geographic region. Term "cell" may refer to a base station and/or a coverage area thereof, which depends on a context in which this term is used.

In embodiments of the present disclosure, term "User Equipment (UE)" e.g. refers to a device configured to access a communication network and receive network services via a network device, or may also be called "a Terminal Equipment (TE)". The terminal equipment may be fixed or mobile, and may also be called a Mobile Station (MS), a terminal, a user, a Subscriber Station (SS), an Access Terminal (AT), a station and so on.

The terminal equipment may include but be not limited to the following devices: a Cellular Phone, a Personal Digital Assistant (PDA), a wireless modem, a wireless communication device, a handheld device, a machine type communication device, a laptop computer, a cordless phone, a smart phone, a smart watch, a digital camera, or may be an IAB-MT, and so on.

For another example, under scenarios such as Internet of Things (IoT), the terminal equipment may further be a machine or an apparatus for performing monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Currently, the 5G technology is studying key issues, solutions and conclusions for supporting advanced media services, such as High Data Rate Low Latency (HDRLL) services, AR/VR/XR services and tactile/multimodal communication services. Goals include:
1. Supporting an enhanced function of a multi-mode service, including:
   - studying whether and how to enable an application program to provide users with relevant tactile and multi-mode data (such as audio, video and tactile data related to a specific time) at similar times, with a focus on a demand for enhanced policy control (such as QoS policy coordination).
2. Enhancing network exposure to support interaction between 5GS (a 5G system) and an application program, including:
   - studying whether and how to perform application synchronization and Quality of Service (QoS) policy coordination among multiple UEs or multiple QoS flows of each UE, and how to interact between an AF and 5GS.
   - studying exposure of 5GS QoS information (such as QoS capabilities) and network conditions to an application program, so as to achieve fast codec/rate adaptation, which helps to provide required QoE (for example, helping to alleviate 5GS congestion).
3. Studying whether and how to perform the following QoS and policy enhancements for XR service and media service transmission, including:
   - studying traffic characteristics of media services that are able to improve a network resource utilization rate and Quality of Experience (QoE).
   - enhancing a QoS framework to support PDU Set granularity (such as a video/audio frame/tile, an application data unit, control information), wherein a PDU Set consists of PDUs having the same QoS requirements.
   - by taking into account different importances of PDU Sets, supporting differentiated QoS processing. For example, a packet belonging to a less important PDU Set is legally discarded to reduce resource waste.
   - whether and how to support uplink-downlink transmission coordination to meet a Round Trip Time (RTT) latency requirement between a UE and a N6 termination point of a User Plane Function (UPF).
   - potential policy enhancements to reduce jitter to the greatest extent, with a focus on demand supply from an Application Function (AF) and expansion of a policy and charging control (PCC) rule.

For uplink traffic, a non-access stratum (NAS) of a UE may identify information related to a PDU Set. Similar to downlink traffic, the information related to a PDU Set may include a PDU Set identifier, a PDU sequence number inside the PDU Set, PDU Set Importance, and optionally, may further include start and/or end markers of the PDU Set, a size of the PDU Set, etc. The PDU Set Importance (which may be expressed as high, medium, low, or numbers ranging from 0 to Nmax) indicates an importance level or priority of a PDU Set in an XR and media (XRM) service flow, which is used by a Radio Access Network (RAN) to perform differentiated processing of the PDU Set, such as priority processing, scheduling, data discard, etc.

The present disclosure considers performing PDU Set discard and relevant operations at a Packet Data Convergence Protocol (PDCP) layer, the PDCP layer needs to know relevant information of an uplink data PDU Set. The information may be determined by UE implementation, i.e., how to determine which SDUs are low-importance data is decided by UE implementation. When a network side indicates congestion or indicates that PSI-based SDU discard needs to be performed, PSI-based SDU discard is implemented.

Various implementations of the present disclosure are described below with reference to the drawings. These implementations are only exemplary and are not limitations on the present disclosure. In the following descriptions, "if...", "in a case where..." and "when...", etc. have the same meaning, and are interchangeable.

### Embodiments of a First Aspect

Embodiments of the present disclosure provide a configuring method for SDU discard, which is described from a side of a terminal equipment.

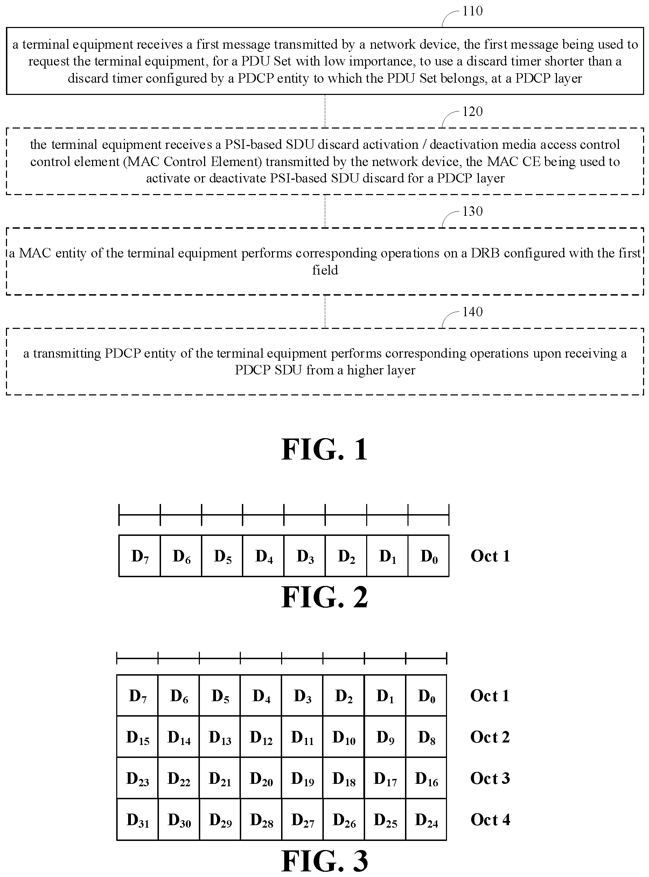

FIG. 1 is a schematic diagram of the configuring method for SDU discard in embodiments of the present disclosure. As shown in FIG. 1, the method includes:
110: a terminal equipment receives a first message transmitted by a network device, the first message being used to request the terminal equipment, for a protocol data unit (PDU) Set with low importance, to use a discard timer shorter than a discard timer configured by a PDCP entity to which the PDU Set belongs, at a PDCP layer.

It is worth noting that a data discard function at a PDCP layer is for PDCP SDUs. A transmitting PDCP entity maintains a discard timer (*discardTimer*) for each PDCP SDU. The discard timer is configured only for DRBs. A duration (i.e., an initial value when the discard timer is started) of the discard timer is configured by an upper layer (e.g., an RRC layer). At a transmitting end, when a PDCP layer receives a SDU from an upper layer, a new discard timer is started. When a discard timer corresponding to a certain PDCP SDU expires, or when a certain PDCP SDU is confirmed to be successfully delivered via a PDCP status report, the transmitting PDCP entity needs to discard the PDCP SDU and corresponding PDCP data PDUs.

The duration of a discard timer is per DRB, that is, per PDCP entity (corresponding to the DRB). Since a UE may simultaneously perform multiple different types of services, such as XR services, and service data may be divided into PDU Sets, however, some services, e.g., non-XR services, do not have PDU Sets, or some services do not need to be differentiated by importance in the same QoS flow. Therefore, for an RAN side, processing may be different per DRB. For example, for some DRBs, PSI-based SDU discard may be configured to be performed, while for some DRBs, this configuration may not be performed. Being configured to perform PSI-based SDU discard indicates that a UE has a capability to perform PSI-based SDU discard for the DRB when receiving a dynamic indication from a network side.

According to embodiments of the present disclosure, when congestion occurs, a network device may use PSI to perform discard of a PDU Set. For uplink, the first message (e.g., dedicated downlink RRC signaling) may be used to request a terminal equipment, for a PDU Set with low importance (i.e., PDCP SDUs belonging to the PDU Set), to use a discard timer shorter than a discard timer configured by a PDCP entity to which the PDU Set belongs, at a PDCP layer. Thus, PSI-based SDU discard is solved, data congestion is avoided, and data transmission for a PDU Set is able to be better supported, so as to achieve integrated packet processing of a PDU Set and differentiated PDU Set processing, thereby improving user experience of XR and media services.

In some embodiments, the first message includes a first Information Element (IE), the first IE including a first field, the first field being used to indicate whether a DRB corresponding to the first field is configured with PSI-based SDU discard.

In the above embodiments, the network device indicates, via the first field of the first IE of the first message, whether a DRB corresponding to the first field is configured with PSI-based SDU discard, thereby solving said problem and achieving said effect.

In some embodiments, when the first field is configured, it indicates that a DRB corresponding to the first field is configured with PSI-based SDU discard. The first field is, for example, a field for a discard timer for low importance (*discardTimerForLowImportance*).

In the above embodiments, whether a DRB corresponding to a first field is configured with PSI-based SDU discard is indicated by whether the first field is configured. Thus, by an implicit manner, a DRB configured with a discard timer for low importance is considered to be configured with PSI-based SDU discard.

In the above embodiments, in order to implement PSI-based SDU discard, a discard timer for a PDU Set with low importance (i.e., a high PSI value, because a PSI being 0 generally indicates the highest importance) may be configured for certain DRBs, which is called as a discard timer for low importance, a duration of the timer is shorter than a discard timer configured for the DRB (*discardTimer*, that is, a normal discard timer which is used during non-congestion or for PDU Sets with high importance). In this way, during uplink congestion, the discard timer for low importance may be used for PDU Sets with low importance in the DRB, thereby releasing resources as soon as possible and alleviating congestion.

In the above embodiments, the first message may be, for example, an *RRCReconfiguration* message, and the first information element (IE) may be, for example, a *PDCP-Config* IE. Configuration of a DRB is equivalent to configuring a corresponding PDCP entity, thereby a field for a discard timer for low importance in the *PDCP-Config* IE is used to indicate whether the DRB is configured with PSI-based SDU discard. If the field is configured, it indicates that a DRB corresponding to PDCP-Config to which the field belongs is configured with PSI-based SDU discard, and a specific discard method is performed by a PDCP layer.

For the above embodiments, a description regarding TS 38.331 in the Standard may be enhanced. For example, the description regarding TS 38.331 may be modified as follows:

| |
|---|
| ***discardTimerForLowImportance*** |
| Value in ms of discardTimerForLowImportance specified in TS 38.323 [5]. Value ms0 corresponds to 0 ms, value ms2 corresponds to 2 ms and so on. The value of this timer for a PDCP entity is always configured shorter than discardTimer, discardTimerExt or discardTimerExt2, whichever is used for the PDCP entity. **If present, it indicates that this DRB is configured with PSI-based SDU discard specified in TS38.323 [5].** |

In some other embodiments, the first field indicates whether a DRB to which the first field corresponds is configured with PSI-based SDU discard.

In the above embodiments, the first message may be, for example, an *RRCReconfiguration* message, and the first IE may be, for example, a *PDCP-Config* IE, and by adding a new first field in the *PDCP-Config* IE, whether the DRB is configured with PSI-based SDU discard is indicated.

In the above embodiments, the first field is called, for example, *psi-BasedDiscard,* that is, the first field is a field for PSI-based discard, and the field may be of enumerated type with a value being true, i.e., as long as the field is configured, the UE is configured with PSI-based SDU discard. That is, the UE needs to perform PSI-based SDU discard for the PDCP entity when receiving an indication from a network side. The present disclosure is not limited thereto. The first field may further be of Boolean type. For a specific indication method, related technologies may be referred to, and a description thereof is omitted here.

For the above embodiments, a description regarding TS 38.331 in the Standard may be enhanced. For example, the description regarding TS 38.331 may be modified as follows:

| |
|---|
| 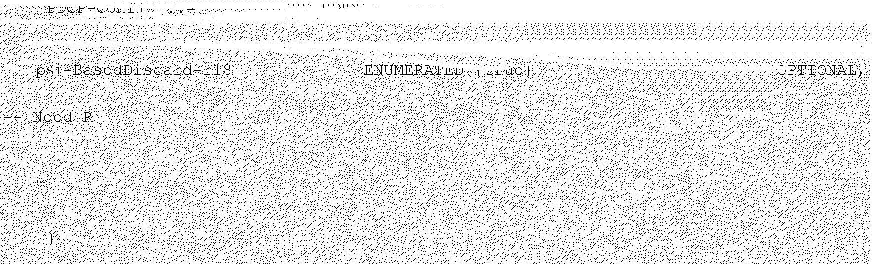 |
| ***psi-BasedDiscard*** |
| If set to true, the UE shall perform PSI-based SDU discarding for this PDCP entity when indicated by the network, as specified in TS 38.323 [5]. |

In some embodiments, as shown in FIG. 1, the method may further include:
120: the terminal equipment receives a PSI-based SDU discard activation / deactivation media access control control element (MAC Control Element) transmitted by the network device, the MAC CE being used to activate or deactivate PSI-based SDU discard for a PDCP layer.

In the above embodiments, a network side activates or deactivates PSI-based SDU discard for a PDCP layer by transmitting a PSI-based SDU discard activation/deactivation MAC CE, i.e., indicates whether PSI-based SDU discard may be performed at a PDCP layer.

In the above embodiments, optionally, PSI-based SDU discard is initialized to a deactivation status during RRC configuration, reconfiguration, or reconfiguration with sync. That is, only a MAC CE is able to activate a PSI-based SDU discard function.

In the above embodiments, a Di field of each bit of an octet of the MAC CE indicates an activation/deactivation status of a corresponding DRB for PSI-based SDU discard.

FIG. 2 is a schematic diagram of a format of the MAC CE. As shown in FIG. 2, in a possible implementation, a length of the MAC CE is 1 octet, and a Di field of each bit of the octet indicates an activation/deactivation status (on PSI-based SDU discard) of a DRB (DRBi) configured with a discard timer for low importance.

In the above implementation, the i is an ascending order of DRB identifiers (DRB IDs) of all DRBs (all DRBs for PSI-based SDU discard) configured with a discard timer for low importance.

In one example, a Di field set to 1 indicates that PSI-based SDU discard for DRBi is activated; and a Di field set to 0 indicates that PSI-based SDU discard for DRBi is deactivated. The present disclosure is not limited thereto, and vice versa.

In the above implementations, since each octet has eight bits, at most 8 DRBs are configured with a discard timer for low importance.

For the above embodiments, a description regarding TS 38.321 in the Standard may be enhanced. For example, the description regarding TS 38.321 may be modified as follows:

| |
|---|
| Di: This field indicates the activation/deactivation status of the PSI-based SDU discard of DRB i, where i is the ascending order of the DRB ID among the DRBs configured with discardTimerForLowImportance. The Di field set to 1 indicates that the PSI-based SDU discard shall be activated for DRB i. The Di field set to 0 indicates that the PSI-based SDU discard shall be deactivated for DRB i. |

FIG. 3 is another schematic diagram of a format of the MAC CE. As shown in FIG. 3, in another possible implementation, a length of the MAC CE is 4 octets, and a Di field of each bit of each octet indicates an activation/deactivation status of a corresponding DRB for PSI-based SDU discard.

In the above implementation, an identifier of a DRB corresponding to a Di field is i+1, the i+1 being one number from 1 to 32. For example, D0 corresponds to DRB identifier 1, D1 corresponds to DRB identifier 2, and so on.

In one example, a Di field set to 1 indicates that PSI-based SDU discard for a DRB with an identifier being i+1 is activated; and a Di field set to 0 indicates that PSI-based SDU discard for a DRB with an identifier being i+1 is deactivated. The present disclosure is not limited thereto, and vice versa.

In the above implementations, for DRB identifiers that are not configured, a corresponding Di bit may be a reserved bit, and the UE may ignore the reserved bit. The present application is not limited thereto, and the reserved bit may further be used for other purposes.

In a further possible implementation, a length of the MAC CE is 1 to 4 octets, depending on the number of configured DRBs, a Di field of each bit of each octet indicates an activation/deactivation status of a corresponding DRB (DRBi) for PSI-based SDU discard.

In the above implementations, i is an ascending order of DRB identifiers of all DRBs (e.g., all configured DRBs). For example, identifiers of configured DRBs are sorted in ascending order, and corresponding Di is placed in the MAC CE. The number of configured DRBs may be 1 to 29, the present application is not limited thereto.

In one example, a Di field set to 1 indicates that PSI-based SDU discard for DRBi is activated; and a Di field set to 0 indicates that PSI-based SDU discard for DRBi is deactivated. The present disclosure is not limited thereto, and vice versa.

In the above implementations, if the number of configured DRBs is not a multiple of 8, extra bits in a last octet may be reserved bits, and the UE may ignore the reserved bits. The present application is not limited thereto, and the reserved bits may further be used for other purposes.

In some embodiments, as shown in FIG. 1, the method may further include:
130: a MAC entity of the terminal equipment performs corresponding operations on a DRB configured with the first field. For example, the first field is a field for a discard timer for low importance.

For example, if a PSI-Based SDU Discard Activation/Deactivation MAC CE is received, and the MAC CE indicates that PSI-based SDU discard for the DRB is activated, an activation status of the PSI-based SDU discard for the DRB is indicated to an upper layer.

For another example, if a PSI-Based SDU Discard Activation/Deactivation MAC CE is received, and the MAC CE indicates that PSI-based SDU discard for the DRB is deactivated, a deactivation status of the PSI-based SDU discard for the DRB is indicated to an upper layer.

A format of the MAC CE has been described above, and is not further elaborated here.

In some embodiments, as shown in FIG. 1, the method may further include:
140: a transmitting PDCP entity of the terminal equipment performs corresponding operations upon receiving a PDCP SDU from an upper layer.

For example, if the transmitting PDCP entity (or a DRB corresponding to the transmitting PDCP entity) is configured with a discard timer for low importance, and PSI-based SDU discard is activated, and the PDCP SDU belongs to a PDU Set with low importance, the discard timer for low importance associated with the PDCP SDU is started.

In the above embodiments, optionally, when the discard timer for low importance expires, the transmitting PDCP entity discards the PDCP SDU and corresponding PDCP data PDUs.

According to the above embodiments, when performing a transmission operation at a PDCP layer, when a PDCP SDU is received from an upper layer, the transmitting PDCP entity performs the above operation, thereby solving a problem of proactive data discard of a PDU Set in a congestion state of a radio access network, which may be used to better support XR and media service applications, and may guarantee differentiated processing of PDU Sets and meet integrated data processing demands of PDU Sets.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

It is worth noting that the above FIG. 1 only schematically describes embodiments of the present disclosure, however the present disclosure is not limited thereto. For example, an execution order of the above operations may be adjusted, and some other operations may be added or some of the operations may be reduced. Those skilled in the art may make appropriate modifications according to the above contents, not being limited to records in the above FIG. 1.

Embodiments of the present disclosure further provide a configuring method for SDU discard, which is described from a side of a network device. It should be noted that this method is network-side processing corresponding to the configuring method for SDU discard in the aforementioned embodiments, and contents same as those in the aforementioned embodiments will not be repeated.

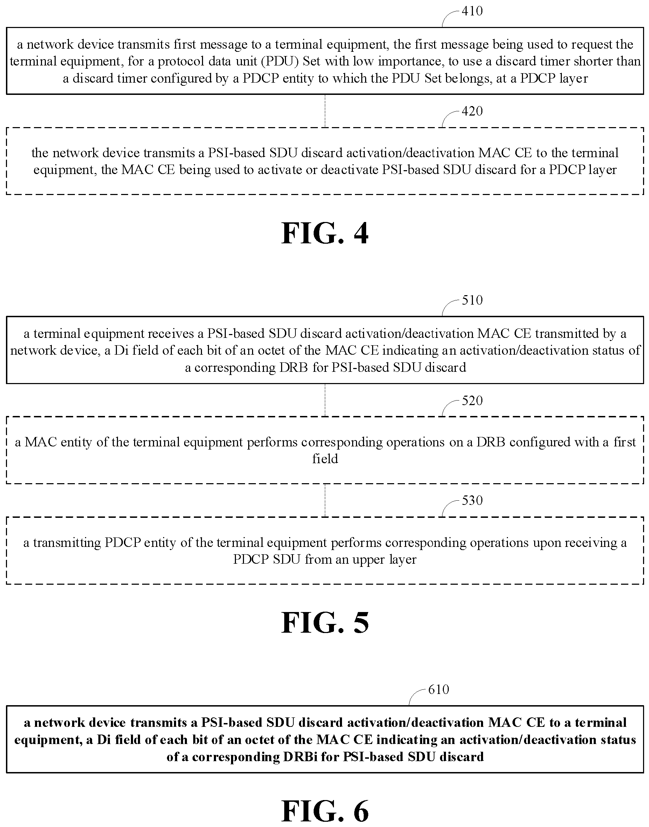

FIG. 4 is a schematic diagram of the configuring method for SDU discard in embodiments of the present disclosure, as shown in FIG. 4, the method includes:
410: a network device transmits a first message to a terminal equipment, the first message being used to request the terminal equipment, for a protocol data unit (PDU) Set with low importance, to use a discard timer shorter than a discard timer configured by a PDCP entity to which the PDU Set belongs, at a PDCP layer.

In some embodiments, the first message includes a first IE, the first IE including a first field, the first field being used to indicate whether a DRB corresponding to the first field is configured with PSI-based SDU discard.

In some embodiments, as described above, when the first field is configured, it indicates that the DRB corresponding to the first field is configured with PSI-based SDU discard.

In some embodiments, as described above, the first field indicates whether the DRB to which the first field corresponds is configured with PSI-based SDU discard.

In some embodiments, as shown in FIG. 4, the method may further include:
420: the network device transmits a PSI-based SDU discard activation/deactivation MAC CE to the terminal equipment, the MAC CE being used to activate or deactivate PSI-based SDU discard for a PDCP layer.

Relevant contents about the MAC CE and relevant operations of the terminal equipment have been described in the preceding text, and are not repeated here.

According to the method in embodiments of the present disclosure, PSI-based SDU discard is solved, data congestion is avoided, and data transmission for a PDU Set is able to be better supported, so as to achieve integrated packet processing of a PDU Set and differentiated PDU Set processing, thereby improving user experience of XR and media services.

### Embodiments of a Second Aspect

Embodiments of the present disclosure provide a configuring method for SDU discard, which is described from a side of a terminal equipment. Contents same as those in embodiments of the first aspect are not repeated again.

FIG. 5 is a schematic diagram of the configuring method for SDU discard in embodiments of the present disclosure. As shown in FIG. 5, the method includes:
510: a terminal equipment receives a PSI-based SDU discard activation/deactivation MAC CE transmitted by a network device, a Di field of each bit of an octet of the MAC CE indicating an activation/deactivation status of a corresponding DRB for PSI-based SDU discard.

In the above embodiments, by enhancing MAC layer behaviors, in a PSI-based SDU discard activation/deactivation MAC CE, a Di field of each bit of an octet indicates an activation/deactivation status of a DRB for PSI-based SDU discard. Thus, a problem of proactive data discard of a PDU Set in a congestion state of a radio access network is solved, which may be used to better support XR and media service applications, and may guarantee differentiated processing of PDU Sets and meet integrated data processing demands of PDU Sets.

In the above embodiments, a network side activates or deactivates PSI-based SDU discard for a PDCP layer by transmitting the PSI-based SDU discard activation/deactivation MAC CE, i.e., indicates whether PSI-based SDU discard may be performed at a PDCP layer.

It is worth noting that a length of the PSI-based SDU discard activation/deactivation MAC CE is generally 1 octet, that is, activation/deactivation statuses of 8 DRBs for PSI-based SDU discard may only be indicated. However, in related arts, each UE may have a total of 29 DRBs, and a DRB identifier may be any one integer from 1 to 32. It may be seen that the MAC CE is unable to meet a demand of indicating all DRBs.

In order to solve this problem, embodiments of the present disclosure propose corresponding solutions.

In some embodiments, the above problem is solved by limiting a network side to configure PSI-based SDU discard for at most 8 DRBs. That is, during RRC configuration, it is necessary to ensure that at most 8 DRBs (i.e., 8 PDCP entities) are configured with a discard timer for low importance.

In the above embodiments, as shown in FIG. 2, a length of the MAC CE is 1 octet, and a Di field of each bit of the octet indicates an activation/deactivation status of a DRB configured with a discard timer for low importance. The i is an ascending order of DRB identifiers of all DRBs configured with a discard timer for low importance.

In one possible implementation, a Di field set to 1 indicates that PSI-based SDU discard for DRBi is activated; and a Di field set to 0 indicates that PSI-based SDU discard for DRBi is deactivated.

In the above embodiments, when a network side transmits a PSI-based SDU discard activation/deactivation MAC CE, a Di field of each bit therein indicates an activation/deactivation status of a DRB configured with a discard timer for low importance (or configured with PSI-based SDU discard), the total number of these DRBs does not exceed 8, which may be accommodated by 1 octet. Thus, said problem is solved.

In the above embodiments, if the number of DRBs configured with a discard timer for low importance is less than 8, these DRB identifiers may use lower bits (starting from D0) of an octet, and remaining bit(s) may be used as reserved bit(s). The terminal equipment may ignore the reserved bit(s), or may use the reserved bit(s) for other purposes.

In some other embodiments, said problem is solved by modifying a format of the PSI-based SDU discard activation/deactivation MAC CE to increase a length to 4 octets.

In the above embodiments, as shown in FIG. 3, a length of the MAC CE is 4 octets, and a Di field of each bit of each octet of the MAC CE indicates an activation/deactivation status of a corresponding DRB for PSI-based SDU discard. For example, an identifier of a DRB corresponding to the Di field is i+1, for example D0 corresponds to DRB identifier 1, D1 corresponds to DRB identifier 2, and so on.

In one possible implementation, a Di field set to 1 indicates that PSI-based SDU discard for a DRB with an identifier being i+1 is activated; and a Di field set to 0 indicates that PSI-based SDU discard for a DRB with an identifier being i+1 is deactivated.

In the above embodiments, for DRB identifiers that are not configured, a corresponding Di bit may serve as a reserved bit. The terminal equipment may ignore the reserved bit, or may use the reserved bit for other purposes.

In some further embodiments, said problem is solved by modifying a format of the PSI-based SDU discard activation/deactivation MAC CE to increase a length being 1 to 4 octets. Identifiers of configured DRBs are sorted in ascending order, and corresponding Di is placed in a MAC CE.

In the above embodiments, the number of the configured DRBs may be 1 to 29. To align to an integer number of octets, the number of octets is 1 to 4.

In the above embodiments, a length of the MAC CE is 1 to 4 octets, and a Di field of each bit of each octet of the MAC CE indicates an activation/deactivation status of a corresponding DRB for PSI-based SDU discard. The i is an ascending order of DRB identifiers of all DRBs (e.g., all configured DRBs).

In one possible implementation, a Di field set to 1 indicates that PSI-based SDU discard for DRBi is activated; and a Di field set to 0 indicates that PSI-based SDU discard for DRBi is deactivated.

In the above embodiments, if the number of configured DRBs is not a multiple of 8, extra bit(s) in a last octet may serve as reserved bit(s). The terminal equipment may ignore the reserved bit(s), or may use the reserved bit(s) for other purposes.

In some embodiments, as shown in FIG. 5, the method may further include:
520: a MAC entity of the terminal equipment performs corresponding operations on a DRB configured with a first field.

For example, if a PSI-based SDU discard activation/deactivation MAC CE is received and the MAC CE indicates that PSI-based SDU discard for the DRB is activated, an activation status for the PSI-based SDU discard for the DRB is indicated to an upper layer.

For another example, if a PSI-based SDU discard activation/deactivation MAC CE is received and the MAC CE indicates that PSI-based SDU discard for the DRB is deactivated, a deactivation status for the PSI-based SDU discard for the DRB is indicated to an upper layer.

In the above embodiments, processing of operation 520 is similar to processing of the above operation 130, and will not be elaborated here.

In some embodiments, as shown in FIG. 5, the method may further include:
530: a transmitting PDCP entity of the terminal equipment performs corresponding operations upon receiving a PDCP SDU from an upper layer.

For example, if the transmitting PDCP entity (or a DRB corresponding to the transmitting PDCP entity) is configured with a discard timer for low importance, and PSI-based SDU discard is activated, and the PDCP SDU belongs to a PDU Set with low importance, a discard timer for low importance associated with the PDCP SDU is started.

Optionally, when the discard timer for low importance expires, the transmitting PDCP entity of the terminal equipment discards the PDCP SDU and corresponding PDCP data PDUs.

In the above embodiments, processing of operation 530 is similar to processing of the above operation 140, and will not be elaborated here.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

It is worth noting that the above FIG. 5 only schematically describes embodiments of the present disclosure, however the present disclosure is not limited thereto. For example, some other operations may be added or certain operations therein may be reduced. Those skilled in the art may make appropriate modifications according to the above contents, not being limited to records in the above FIG. 5.

In embodiments of the present disclosure, the PSI-based SDU discard may be initialized to a deactivation status during RRC configuration, reconfiguration, or reconfiguration with sync. That is, only the MAC CE is able to activate the PSI-based SDU discard function.

Embodiments of the present disclosure further provide a configuring method for SDU discard, which is described from a side of a network device. It should be noted that this method is network-side processing corresponding to the configuring method for SDU discard in the aforementioned embodiments, and contents same as those in the aforementioned embodiments will not be repeated.

FIG. 6 is a schematic diagram of the configuring method for SDU discard in embodiments of the present disclosure, as shown in FIG. 6, the method includes:
610: a network device transmits a PSI-based SDU discard activation/deactivation MAC CE to a terminal equipment, a Di field of each bit of an octet of the MAC CE indicating an activation/deactivation status of a corresponding DRBi for PSI-based SDU discard.

In the above embodiments, relevant contents about the MAC CE have been described above, and are not further elaborated here.

Each of the above embodiments only exemplarily describes embodiments of the present disclosure, however the present disclosure is not limited thereto, appropriate modifications may be further made based on each of the above embodiments. For example, each of the above embodiments may be used individually, or one or more of the above embodiments may be combined.

According to the method in embodiments of the present disclosure, a problem of proactive data discard of a PDU Set in a congestion state of a radio access network is solved, which may be used to better support XR and media service applications, and may guarantee differentiated processing of PDU Sets and meet integrated data processing demands of PDU Sets.

### Embodiments of a Third Aspect

Embodiments of the present disclosure provide a configuring apparatus for service data unit (SDU) discard.

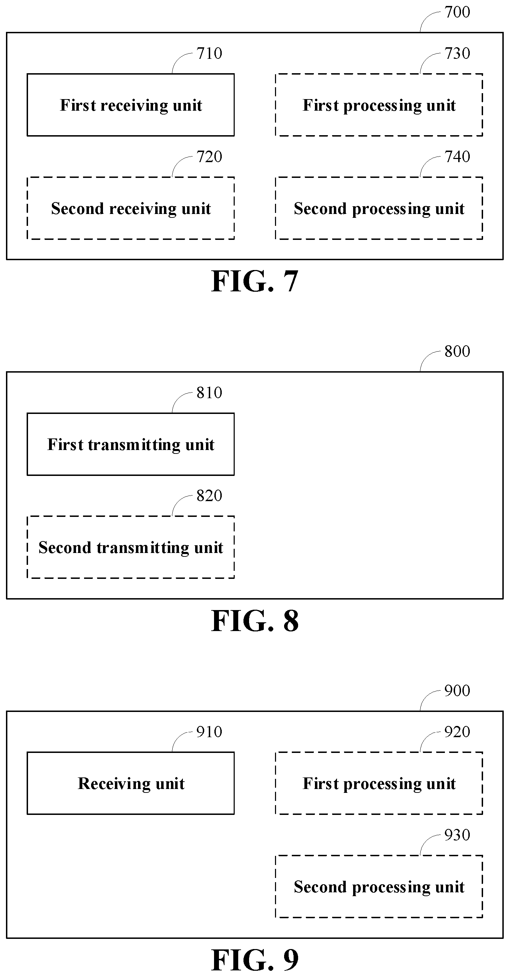

FIG. 7 is a schematic diagram of the configuring apparatus for SDU discard in embodiments of the present disclosure, the apparatus may be e.g., a terminal equipment, or may be one or more components or assemblies configured in the terminal equipment. A principle of the apparatus to solve problems is same as the method shown in FIG. 1 in embodiments of the first aspect, thus a specific implementation thereof may refer to implementation of the method shown in FIG. 1 in embodiments of the first aspect, the same contents are not repeated.

As shown in FIG. 7, the configuring apparatus 700 for SDU discard includes:
a first receiving unit 710 configured to receive a first message transmitted by a network device, the first message being used to request the terminal equipment, for a protocol data unit (PDU) Set with low importance, to use a discard timer shorter than a discard timer configured by a PDCP entity to which the PDU Set belongs, at a packet data convergence protocol (PDCP) layer.

In some embodiments, the first message includes a first IE, the first IE including a first field, the first field being used to indicate whether a DRB corresponding to the first field is configured with PSI-based SDU discard.

In the above embodiments, in one possible implementation, when the first field is configured, it indicates that a DRB corresponding to the first field is configured with PSI-based SDU discard. The first field is, for example, a field for a discard timer for low importance.

In the above embodiments, in another possible implementation, the first field indicates whether a DRB to which the first field corresponds is configured with PSI-based SDU discard. The first field is, for example, a field for PSI-based discard, and the field may be of an enumerated type or a Boolean type.

In some embodiments, as shown in FIG. 7, the apparatus 700 may further include:
a second receiving unit 720 configured to receive a PSI-based SDU discard activation/deactivation MAC CE transmitted by the network device, the MAC CE being used to activate or deactivate PSI-based SDU discard for a PDCP layer.

In the above embodiments, the PSI-based SDU discard may be initialized to a deactivation status during RRC reconfiguration or reconfiguration with sync.

In the above embodiments, the MAC CE may be of 1 octet, or may be of 4 octets, or may be of 1 to 4 octets. Details have been described in embodiments of the first aspect, and will not be elaborated here.

In some embodiments, as shown in FIG. 7, the apparatus 700 may further include:
a first processing unit 730 configured to perform corresponding operations on a DRB configured with the first field, via a MAC entity of the terminal equipment.

For example, if the PSI-based SDU discard activation/deactivation MAC CE is received and the MAC CE indicates that the PSI-based SDU discard for the DRB is activated, an activation status for the PSI-based SDU discard for the DRB is indicated to an upper layer.

For another example, if the PSI-based SDU discard activation/deactivation MAC CE is received and the MAC CE indicates that the PSI-based SDU discard for the DRB is deactivated, a deactivation status for the PSI-based SDU discard for the DRB is indicated to an upper layer.

In some embodiments, as shown in FIG. 7, the apparatus 700 may further include:
a second processing unit 740 configured to perform corresponding operations via a transmitting PDCP entity of the terminal equipment upon receiving a PDCP SDU from an upper layer.

For example, if the transmitting PDCP entity is configured with the discard timer for low importance, and the PSI-based SDU discard is activated, and the PDCP SDU belongs to a PDU Set with low importance, the discard timer for low importance associated with the PDCP SDU is started.

In the above embodiments, optionally, when the discard timer for low importance expires, the second processing unit 740 discards the PDCP SDU and corresponding PDCP data PDUs via the transmitting PDCP entity.

Embodiments of the present disclosure further provide a configuring apparatus for service data unit (SDU) discard.

FIG. 8 is a schematic diagram of the configuring apparatus for SDU discard in embodiments of the present disclosure, the apparatus may be e.g., a network device, or may be one or more components or assemblies configured in the network device. A principle of the apparatus to solve problems is same as the method shown in FIG. 4 in embodiments of the first aspect, thus a specific implementation thereof may refer to implementation of the method shown in FIG. 4 in embodiments of the first aspect, the same contents are not repeated.

As shown in FIG. 8, the configuring apparatus 800 for SDU discard includes:
a first transmitting unit 810 configured to transmit a first message to a terminal equipment, the first message being used to request the terminal equipment, for a protocol data unit (PDU) Set with low importance, to use a discard timer shorter than a discard timer configured by a PDCP entity to which the PDU Set belongs, at a packet data convergence protocol (PDCP) layer.

In the above embodiments, contents related to the first message have been described in preceding embodiments, and are not elaborated here.

In some embodiments, as shown in FIG. 8, the apparatus 800 may further include:
a second transmitting unit 820 configured to transmit a PSI-based SDU discard activation/deactivation MAC CE to the terminal equipment, the MAC CE being used to activate or deactivate PSI-based SDU discard for a PDCP layer.

In the above embodiments, the PSI-based SDU discard may be initialized to a deactivation status during RRC reconfiguration or reconfiguration with sync.

In the above embodiments, contents related to the MAC CE have been described in preceding embodiments, and are not elaborated here.

Embodiments of the present disclosure further provide a configuring apparatus for service data unit (SDU) discard.

FIG. 9 is a schematic diagram of the configuring apparatus for SDU discard in embodiments of the present disclosure, the apparatus may be e.g., a terminal equipment, or may be one or more components or assemblies configured in the terminal equipment. A principle of the apparatus to solve problems is same as the method shown in FIG. 5 in embodiments of the second aspect, thus a specific implementation thereof may refer to implementation of the method shown in FIG. 5 in embodiments of the second aspect, the same contents are not repeated.

As shown in FIG. 9, the configuring apparatus 900 for SDU discard includes:
a receiving unit 910 configured to receive a PSI-based SDU discard activation/deactivation MAC CE transmitted by a network device, a Di field of each bit of an octet of the MAC CE indicating an activation/deactivation status of a corresponding DRBi for PSI-based SDU discard.

In the above embodiments, contents related to the MAC CE have been described in preceding embodiments, and are not elaborated here.

In some embodiments, as shown in FIG. 9, the apparatus 900 may further include:
a first processing unit 920 configured to perform corresponding operations on a DRB configured with a first field, via a MAC entity of the terminal equipment.

For example, if the PSI-based SDU discard activation/deactivation MAC CE is received and the MAC CE indicates that the PSI-based SDU discard for the DRB is activated, an activation status for the PSI-based SDU discard for the DRB is indicated to an upper layer.

For another example, if the PSI-based SDU discard activation/deactivation MAC CE is received and the MAC CE indicates that the PSI-based SDU discard for the DRB is deactivated, a deactivation status for the PSI-based SDU discard for the DRB is indicated to an upper layer.

In some embodiments, as shown in FIG. 9, the apparatus 900 may further include:
a second processing unit 930 configured to perform corresponding operations via a transmitting PDCP entity of the terminal equipment upon receiving a PDCP SDU from an upper layer.

For example, if the transmitting PDCP entity (or a DRB corresponding to the transmitting PDCP entity) is configured with a discard timer for low importance, and the PSI-based SDU discard is activated, and the PDCP SDU belongs to a PDU Set with low importance, a discard timer for low importance associated with the PDCP SDU is started.

In the above embodiments, optionally, when the discard timer for low importance expires, the second processing unit 930 may discard the PDCP SDU and corresponding PDCP data PDUs via the transmitting PDCP entity.

Embodiments of the present disclosure further provide a configuring apparatus for service data unit (SDU) discard.

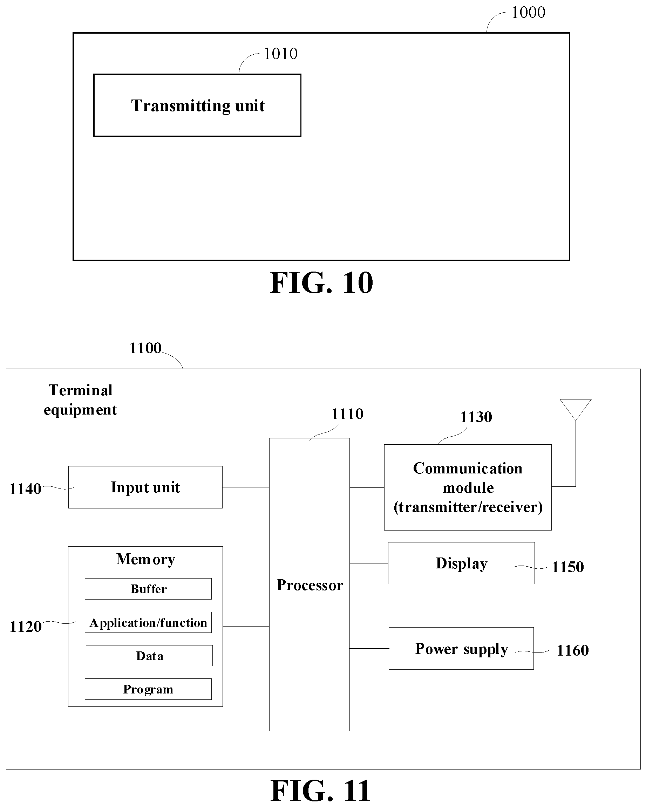

FIG. 10 is a schematic diagram of the configuring apparatus for SDU discard in embodiments of the present disclosure, the apparatus may be e.g., a network device, or may be one or more components or assemblies configured in the network device. A principle of the apparatus to solve problems is same as the method shown in FIG. 6 in embodiments of the second aspect, thus a specific implementation thereof may refer to implementation of the method shown in FIG. 6 in embodiments of the second aspect, the same contents are not repeated.

As shown in FIG. 10, the configuring apparatus 1000 for SDU discard includes:
a transmitting unit 1010 configured to transmit a PSI-based SDU discard activation/deactivation MAC CE to a terminal equipment, a Di field of each bit of an octet of the MAC CE indicating an activation/deactivation status of a corresponding DRBi for PSI-based SDU discard.

In the above embodiments, contents related to the MAC CE have been described in preceding embodiments, and are not elaborated here.

It is worth noting that the above text only describes components or modules related to the present disclosure, however the present disclosure is not limited thereto. Apparatuses 700, 800, 900, 1000 in embodiments of the present disclosure may further include other components or modules. For detailed contents of these components or modules, relevant technologies may be referred to.

Moreover, for the sake of simplicity, FIG. 7 to FIG. 10 only exemplarily show a connection relationship or signal direction between components or modules, however persons skilled in the art should know that various relevant technologies such as bus connection may be adopted. Each of the above components or modules may be implemented via a hardware facility such as a processor, a memory, a transmitter, a receiver, etc. Embodiments of the present disclosure do not impose limitations thereto.

According to the apparatuses in embodiments of the present disclosure, a problem of proactive data discard of a PDU Set in a congestion state of a radio access network is solved, which may be used to better support XR and media service applications, and may guarantee differentiated processing of PDU Sets and meet integrated data processing demands of PDU Sets.

### Embodiments of a Fourth Aspect

Embodiments of the present disclosure provide a communication system, including a terminal equipment and a network device, the terminal equipment is configured to perform the method shown in FIG. 1 in embodiments of the first aspect, correspondingly, the network device is configured to perform the method shown in FIG. 4 in embodiments of the first aspect or the method shown in FIG. 6 in embodiments of the second aspect. Behaviors of the terminal equipment and the network device have been described in detail in the embodiments of the first and second aspects, contents thereof are incorporated here and will not be elaborated here.

Embodiments of the present disclosure further provide a terminal equipment, including a memory configured to store a computer program, and a processor configured to perform the computer program to implement the method described in FIG. 1 in embodiments of the first aspect or the method described in FIG. 5 in embodiments of the second aspect.

FIG. 11 is a schematic diagram of the terminal equipment in embodiments of the present disclosure. As shown in FIG. 11, the terminal equipment 1100 may include a processor 1110, and a memory 1120 storing data and programs and coupled to the processor 1110. It is worth noting that this figure is exemplary, other types of structures may also be used to supplement or replace this structure, so as to implement a telecommunication function or other functions.

For example, the processor 1110 may be configured to execute a program to implement the method described in FIG. 1 in embodiments of the first aspect or the method described in FIG. 5 in embodiments of the second aspect.

As shown in FIG. 11, the terminal equipment 1100 may further include: a communication module 1130, an input unit 1140, a display 1150, and a power supply 1160. Functions of the above components are similar to related arts, and are not further elaborated here. It is worth noting that the terminal equipment 1100 does not have to include all components shown in FIG. 11, said components are not indispensable. Moreover, the terminal equipment 1100 may further include components not shown in FIG. 11, related arts may be referred to.

Embodiments of the present disclosure further provide a network device, including a memory configured to store a computer program, and a processor configured to perform the computer program to implement the method described in FIG. 4 in embodiments of the first aspect or the method described in FIG. 6 in embodiments of the second aspect.

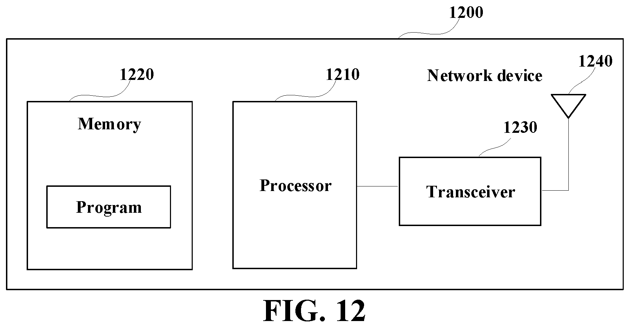

FIG. 12 is a schematic diagram of the network device in embodiments of the present disclosure. As shown in FIG. 12, the network device 1200 may include: a central processing unit (CPU) 1210 and a memory 1220, the memory 1220 being coupled to the central processing unit 1210. The memory 1220 may store various data; moreover, also stores a program for information processing, and executes the program under the control of the central processor 1210, so as to receive various information transmitted by a terminal equipment and transmit various information to a terminal equipment.

For example, the processor 1210 may be configured to execute a program to implement the method described in FIG. 4 in embodiments of the first aspect or the method described in FIG. 6 in embodiments of the second aspect.

In addition, as shown in FIG. 12, the network device 1200 may further include a transceiver 1230 and an antenna 1240, etc., wherein functions of said components are similar to related arts and are not further elaborated here. It is worth noting that the network device 1200 does not have to include all components shown in FIG. 12. Moreover, the network device 1200 may further include components not shown in FIG. 12, related arts may be referred to.

Embodiments of the present disclosure further provide a computer readable program, wherein when a terminal equipment executes the program, the program enables a computer to execute the method described in FIG. 1 in embodiments of the first aspect or the method described in FIG. 5 in embodiments of the second aspect, in the terminal equipment.

Embodiments of the present disclosure further provide a storage medium in which a computer readable program is stored, wherein the computer readable program enables a computer to execute the method described in FIG. 1 in embodiments of the first aspect or the method described in FIG. 5 in embodiments of the second aspect, in a terminal equipment.

Embodiments of the present disclosure further provide a computer readable program, wherein when a network device executes the program, the program enables a computer to execute the method described in FIG. 4 in embodiments of the first aspect or the method described in FIG. 6 in embodiments of the second aspect, in the network device

Embodiments of the present disclosure further provide a storage medium in which a computer readable program is stored, wherein the computer readable program enables a computer to execute the method described in FIG. 4 in embodiments of the first aspect or the method described in FIG. 6 in embodiments of the second aspect, in a network device.

Apparatuses and methods in the present disclosure may be implemented by hardware, or may be implemented by combining hardware with software. The present disclosure relates to such a computer readable program that when the program is executed by a logic component, the logic component is able to implement apparatuses described in the above text or a constituent component, or the logic component is able to implement various methods or steps described in the above text. Logic component is e.g. a field programmable logic component, a microprocessor, a processor used in a computer, etc. The present disclosure further relates to a storage medium storing the above programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or any other form of storage medium known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit protection scopes of the present disclosure. Persons skilled in the art may make various variations and amendments to the present disclosure according to spirits and principles of the present disclosure, these variations and amendments are also within scopes of the present disclosure.

Regarding the above implementations disclosed in this embodiment, the following supplements are further disclosed:
1. A configuring method for service data unit (SDU) discard, wherein the method includes that:
   a terminal equipment receives a PSI-based SDU discard activation/deactivation MAC CE transmitted by a network device, a Di field of each bit of an octet of the MAC CE indicating an activation/deactivation status of a corresponding DRBi for PSI-based SDU discard.
2. The method according to supplement 1, wherein,
   a length of the MAC CE is 1 octet, and a Di field of each bit of the octet indicates an activation/deactivation status of a DRB configured with a discard timer for low importance.
3. The method according to supplement 1, wherein,
   a length of the MAC CE is 4 octets, and a Di field of each bit of each octet of the MAC CE indicates an activation/deactivation status of a corresponding DRB for PSI-based SDU discard.
4. The method according to supplement 3, wherein,
   an identifier of a DRB corresponding to the Di field is i+1.
5. The method according to supplement 3, wherein,
   the Di field being set to 1 indicates that PSI-based SDU discard for a DRB with an identifier being i+1 is activated; and
   the Di field being set to 0 indicates that PSI-based SDU discard for a DRB with an identifier being i+1 is deactivated.
6. The method according to supplement 1, wherein,
   a length of the MAC CE is 1 to 4 octets, and a Di field of each bit of each octet of the MAC CE indicates an activation/deactivation status of a corresponding DRB for PSI-based SDU discard.
7. The method according to supplement 6, wherein,
   the i is an ascending order of DRB identifiers of all DRBs.
8. The method according to supplement 6, wherein,
   the Di field being set to 1 indicates that PSI-based SDU discard for a DRBi is activated; and
   the Di field being set to 0 indicates that PSI-based SDU discard for a DRBi is deactivated.
9. The method according to supplement 1, wherein,
   the MAC CE is used to activate or deactivate PSI-based SDU discard for a PDCP layer.
10. The method according to supplement 1, wherein,
   the PSI-based SDU discard is initialized to a deactivation status during RRC reconfiguration or reconfiguration with sync.

## Claims

1. A configuring apparatus for service data unit (SDU) discard, configured in a terminal equipment, wherein the apparatus comprises:
a first receiving unit configured to receive a first message transmitted by a network device, the first message being used to request the terminal equipment, for a protocol data unit set (PDU Set) with low importance, to use a discard timer shorter than a discard timer configured by a PDCP entity to which the PDU Set belongs, at a packet data convergence protocol (PDCP) layer.

2. The apparatus according to claim 1, wherein,
the first message comprises a first information element (IE), the first IE comprising a first field, the first field being used to indicate whether a data radio bearer (DRB) to which the first field corresponds is configured with PDU Set Importance (PSI)-based SDU discard.

3. The apparatus according to claim 2, wherein,
the first message is an *RRCReconfiguration* message, and the first IE is *PDCP-Config*.

4. The apparatus according to claim 2, wherein,
when the first field is configured, it is indicated that a DRB corresponding to the first field is configured with PSI-based SDU discard.

5. The apparatus according to claim 4, wherein,
the first field is a field for a discard timer for low importance.

6. The apparatus according to claim 2, wherein,
the first field indicates whether a DRB to which the first field corresponds is configured with PSI-based SDU discard.

7. The apparatus according to claim 2, wherein the apparatus further comprises:
a second receiving unit configured to receive a PSI-based SDU discard activation/deactivation media access control control element (MAC CE) transmitted by the network device, the MAC CE being used to activate or deactivate PSI-based SDU discard for a PDCP layer.

8. The apparatus according to claim 7, wherein the apparatus further comprises:
a first processing unit configured to perform the following operation on a DRB configured with the first field, via a media access control (MAC) entity of the terminal equipment:
if the PSI-based SDU discard activation/deactivation MAC CE is received and the MAC CE indicates that a PSI-based SDU discard for the DRB is activated, indicating an activation status for the PSI-based SDU discard for the DRB to an upper layer.

9. The apparatus according to claim 7, wherein the apparatus further comprises:
a first processing unit configured to perform the following operation on a DRB configured with the first field, via a MAC entity of the terminal equipment:
if the PSI-based SDU discard activation/deactivation MAC CE is received and the MAC CE indicates that a PSI-based SDU discard for the DRB is deactivated, indicating a deactivation status for the PSI-based SDU discard for the DRB to an upper layer.

10. The apparatus according to claim 7, wherein,
a length of the MAC CE is 1 octet, and a Di field of each bit of the octet indicates an activation/deactivation status of a DRBi corresponding to the Di field for a PSI-based SDU discard; and
the i is an ascending order of DRB identifiers of all DRBs configured with the first field.

11. The apparatus according to claim 10, wherein,
the Di field set to 1 indicates that the PSI-based SDU discard for a DRBi is activated; and
the Di field set to 0 indicates that the PSI-based SDU discard for a DRBi is deactivated.

12. The apparatus according to claim 1, wherein the apparatus further comprises:
a second processing unit configured to perform the following operation via a transmitting PDCP entity of the terminal equipment, when a PDCP SDU is received from an upper layer:
if the transmitting PDCP entity is configured with a discard timer for low importance, and PSI-based SDU discard is activated, and the PDCP SDU belongs to a PDU Set with low importance, starting a discard timer for low importance associated with the PDCP SDU.

13. The apparatus according to claim 12, wherein,
when the discard timer for low importance expires, the second processing unit discards the PDCP SDU and corresponding PDCP data PDUs via the transmitting PDCP entity.

14. A configuring apparatus for SDU discard, configured in a terminal equipment, wherein the apparatus comprises:
a receiving unit configured to receive a PSI-based SDU discard activation/deactivation MAC CE transmitted by a network device, a Di field of each bit of an octet of the MAC CE indicating an activation/deactivation status of a DRB corresponding to the Di field for a PSI-based SDU discard.

15. The apparatus according to claim 14, wherein,
a length of the MAC CE is 1 octet, and a Di field of each bit of the octet indicates an activation/deactivation status of a DRB configured with a discard timer for low importance.

16. The apparatus according to claim 15, wherein,
the i is an ascending order of DRB identifiers of all DRBs configured with the discard timer for low importance.

17. The apparatus according to claim 15, wherein,
the Di field set to 1 indicates that the PSI-based SDU discard for a DRBi is activated; and
the Di field set to 0 indicates that the PSI-based SDU discard for a DRBi is deactivated.

18. The apparatus according to claim 15, wherein,
at most 8 DRBs are configured with the discard timer for low importance.

19. The apparatus according to claim 14, wherein the apparatus further comprises:
a first processing unit configured to perform the following operation on a DRB configured with the PSI-based SDU discard, via a MAC entity of the terminal equipment:
if the PSI-based SDU discard activation/deactivation MAC CE is received and the MAC CE indicates that the PSI-based SDU discard for the DRB is activated, indicating an activation status for the PSI-based SDU discard for the DRB to an upper layer.

20. The apparatus according to claim 14, wherein the apparatus further comprises:
a first processing unit configured to perform the following operation on a DRB configured with the PSI-based SDU discard, via a MAC entity of the terminal equipment:
if the PSI-based SDU discard activation/deactivation MAC CE is received and the MAC CE indicates that the PSI-based SDU discard for the DRB is deactivated, indicating a deactivation status for the PSI-based SDU discard for the DRB to an upper layer.
